# EUROPÄISCHE PATENTSCHRIFT

(11) **EP 2 333 354 B1**
(45) Veröffentlichungstag und Bekanntmachung des Hinweises auf die Patenterteilung: **02.07.2014**
(21) Anmeldenummer: 10466032.9
(22) Anmeldetag: 08.12.2010
(51) Int. Cl.: F16B 5/02, F16B 5/04

(54) **Schraub- oder Nietverbindung**
Screw or rivet connection
Liaison vissée ou rivetée

(30) Priorität: 08.12.2009 CZ 20090817
(43) Veröffentlichungstag der Anmeldung: 15.06.2011
(73) Patentinhaber: Skoda Auto A.S., 293 60 Mladá Boleslav (CZ)
(72) Erfinder: Radoslav Sagl, CZ-19000 Praha 9 (CZ)

(56) Entgegenhaltungen:
- DE-A1- 3 329 967
- US-A- 2 096 041
- US-A- 2 210 455
- US-A1- 2003 156 889

## Beschreibung

### Technisches Gebiet

Die Erfindung betrifft eine Schraub- oder Nietverbindung, insbesondere eine Schraubverbindung, die eine maximale Übertragung der gegenüber der Achse des Verbindungselementes radialen Kräfte zwischen den zu verbindenden Bauteilen in der Ebene derer Kontaktflächen sicherstellt (Siehe zum Beispiel US 2003/0156 889 A1, dem Oberbegriff entsprechend).

### Bisheriger Stand der Technik

Aus dem Stand der Technik ist die Sicherung der Schraubverbindungen gegen einen relativen Vorschub der zu verbindenden Bauteile in radialer Richtung gegenüber der Schraubachse bekannt, der bei der Überschreitung der durch die Vorspannung der Schraube hervorgerufenen Reibkraft entstehen könnte.

Es werden Bundringe oder Röhren eingesetzt, die mit dem Verbindungselement konzentrisch sind und einen Formkontakt zwischen den zu verbindenden Bauteilen sicherstellen. Diese Mittel werden normalerweise dort eingesetzt, wo die Bauteile mit einziger Schraube verbunden sind oder wo ihre präzise Ausrichtung gegeneinander notwendig ist. Derer Nutzung bei Bauteilen, die mittels mehrere Verbindungselemente verbunden sind, ist jedoch sehr eingeschränkt und aufwändig, da eine hohe Fertigungspräzision eingehalten werden muss.

Weitere bekannte, in DE 33 29 967 A1 beschriebene Lösung ist die Einlegung einer speziellen Beilagscheibe zwischen die zu verbindende Bauteile, welche mit den über die Kontaktfläche herausragenden Vorsprüngen versehen ist. Die Vorsprünge können eine Pyramiden-, Ring- oder Zahnform haben. Beim Anziehen der Schraube werden die Vorsprünge in die entsprechenden Auflageflächen der zu verbindenden Bauteile hineingedrückt, wodurch ein gegenseitiger plastischer Kontakt erreicht wird.

Ähnliches Prinzip ist im e.g. US 2003/0156889 A1 beschrieben, wo die Vorsprünge direkt auf der Kontaktfläche eines der zu verbindenden Bauteile ausgestaltet sind. Diese sind darüber hinaus mit Aussparungen ergänzt, die auf der Kontaktfläche wechselartig mit den Vorsprüngen verteilt sind und in die nach dem Anziehen der Schraube das Material der Kontaktfläche des entsprechenden Bauteils eingedrückt wird.

Der Nachteil solcher Lösungen liegt darin, dass bei dem Eindrücken des Vorsprungs in die Kontaktfläche des entsprechenden glatten Bauteils sein Material nach außen über seine Kontaktfläche verdrängt wird. So entstandener Span gelangt zwischen die beiden Kontaktflächen, wo er dann das vollständige Aufsetzen aufeinander verhindert. Nach dem Anziehen der Schraube mit vorgeschriebenem Moment sind die zu verbindenden Bauteile nur mit einem Teil ihrer Kontaktflächen im Kontakt, und zwar an der Stelle der Verdrängung des Materials, was eine Überschreitung des Grenzdruckes im Kontakt zur Folge hat. Bei einer dynamischen Belastung der Verbindung im Betrieb kann dann das verdrängte Material weiter zusammengedrückt, die Kontaktflächen angenähert und dadurch ein Vorspannungskraftverlust der Schraube verursacht werden.

Weiterer Nachteil, verursacht durch das verdrängte Material, liegt darin, dass bei einem relativen Vorschub der Kontaktflächen aneinander zur weiteren Verdrängung des Materials vor dem Zahn infolge der durch die Verbindung übertragene Querkräfte kommen kann. Dadurch wird die Höhe des Spans erhöht und nachfolgend die zu verbindenden Teile voneinander abgedrückt. Der Sicherungszahn fährt aus der bereits ausgebildeten Höhlung aus und dadurch ein Spielraum entsteht, der einen relativen Vorschub der zu verbindenden Bauteile ermöglicht.

### Darstellung der Erfindung

Die Aufgabe wird durch die erfindungsgemäße Schraub- oder Nietverbindung gemäß Anspruch 1 gelöst. Die Verbindung verbindet mindestens zwei Bauteile, die mit Kontaktflächen aneinander aufsetzen, welche die Öffnung für die Verbindungsschraube oder -niete umschließen. Die Kontaktfläche des ersten Bauteils weist mindestens einen Vorsprung auf, der axial über diese herausragt. Der Vorsprung ist wenigstens am Teil seiner Länge von beiden Seiten unmittelbar mit Aussparungen umschlossen, die ihn von der Kontaktfläche trennen. Der Vorsprung geht also nicht direkt in die Kontaktfläche über, sondern seine Seiten durch Aussparungen von dieser getrennt sind. Am vorteilhaftesten ist der Vorsprung entlang seiner ganzen Länge getrennt. Die Kontaktfläche weist vorteilhaft eine Vielzahl gleichmäßig verteilten Vorsprünge auf, welche die Form von linearen Wülsten haben, die sich radial von der Öffnung für das Verbindungselement nach außen führend erstrecken. Sind die Wülste von der Öffnung für das Verbindungselement bis zum Umfang der Kontaktfläche erstreckt, ist die Kontaktfläche in eine Vielzahl von Winkelsegmenten verteilt, die durch die Kanten der Aussparungen abgegrenzt sind. Dank solcher Anordnung ist die Sicherung gegen Vorschub der Kontaktflächen aneinander bei Einwirkung der Querkräfte in beliebiger Richtung sichergestellt.

Beim Anziehen der Schraube, bzw. Anziehung der Elemente zueinander vor der Umformung der Niete, werden die Vorsprünge in die Kontaktfläche des entsprechenden zweiten Bauteils eingedrückt, wobei an ihren Seiten sich das verdrängte Material von den Vorsprüngen und nach außen von der Kontaktfläche des zweiten Bauteils verschiebt. Die Breite und Tiefe der an Seiten der Vorsprünge ausgebildeten Aussparungen sind ausreichend dimensioniert, damit sie das verdrängte Material komplett erfassen. Das verdrängte Material hindert so nicht das komplette Aufsetzen beider Kontaktflächen aufeinander, und die gewünschte Größe der gegenseitigen Kontaktfläche beider Bauteile, die für die Bewahrung des vorgeschriebenen spezifischen Druckes im Kontakt notwendig ist, wird erzielt.

In weiterer Ausführungsvariante kann der Vorsprung die Form einer ringartigen Wulst haben, der konzentrisch mit der Öffnung für das Verbindungselement ist. Auf der Kontaktfläche können wiederum mehrere solche Vorsprünge sein, am inneren sowie äußeren Umfang mit Aussparungen umringt, die im Grunde gewissen Graben bilden. Dadurch wird auch die Sicherung gegen einen Vorschub der Kontaktflächen aneinander bei Einwirkung der Querkräfte in beliebiger Richtung sichergestellt.

Wird die Verbindung im Betrieb mit grenzwertüberschreitenden Kräften radial zur Achse des Verbindungselementes belastet, bei denen zur Überschreitung des spezifischen Grenzdruckes im Kontakt an den Seiten der Vorsprünge und der Reibkraft durch die Vorspannung der Verbindung kommt, beginnen die Kontaktflächen aneinander sich gegenseitig zu bewegen. Vor dem sich verschiebenden Vorsprung trennt sich von der Kontaktfläche des zweiten Bauteils immer größere Materialmenge, wodurch sich die Kontaktfläche an der Seite des Vorsprungs vergrößert. Dies hat zur Folge die Minderung des Druckes im Kontakt und einen größeren Widerstand gegen die relative Schubbewegung. Der Übergang der Aussparung in die Kontaktfläche weist vorteilhaft eine scharfe Kante, bzw. eine Kante mit möglichst geringerer, technologisch erreichbarer Abschrägung oder Abrundung auf. Das bei der Montage der Verbindung verdrängte Material auf der anderen Seite des Vorsprungs stützt sich bei einer relativen Bewegung an dieser scharfen Kante ab und auch hier wird die relative Vorschubbewegung zwischen den zu verbindenden Bauteilen sekundär verhindert.

Die Vorsprünge haben vorteilhaft im wesentlichen einen Dreieckprofil, was deren Fertigung erleichtern wird. Dies kann z.B. mit einer Matrize mit negativem Profil erfolgen, die aus dem Rohteil mit glatter Oberfläche die erfindungsgemäß geformte Kontaktfläche erstellt. Angesichts der beschränkten Materialfließfähigkeit bei der Umformung und der Beständigkeit des Vorsprungs beim Eindrücken in die entsprechende Kontaktfläche, kann kompromissweise ein Spitzwinkel des Vorsprungs gewählt werden. Für die korrekte Funktion der sekundären Verhinderung einer relativen Schubbewegung ist jedoch wichtig, eine ausreichende Steilheit der dem Vorsprung abgewandten Aussparungswand beizubehalten. Diese Wand sollte in der vorteilhaften Ausführung einen Winkel mit der Auflagefläche nicht unter 130° einschließen. Der Spitzwinkel des Vorsprungs kann identisch mit dem Gipfelwinkel der Aussparung gewählt werden, einer ausreichenden Steilheit der Außenwand der Aussparung entsprechen rund 60°.

Insbesondere aus technologischen Gründen und aufgrund der Materialmenge beim Eindrücken der Vorsprünge ist auch Vorteilhaft, wenn die Höhe der Vorsprünge über der Kontaktfläche im Grunde identisch mit der Aussparungstiefe ist.

### Übersicht der Figuren der Zeichnungen

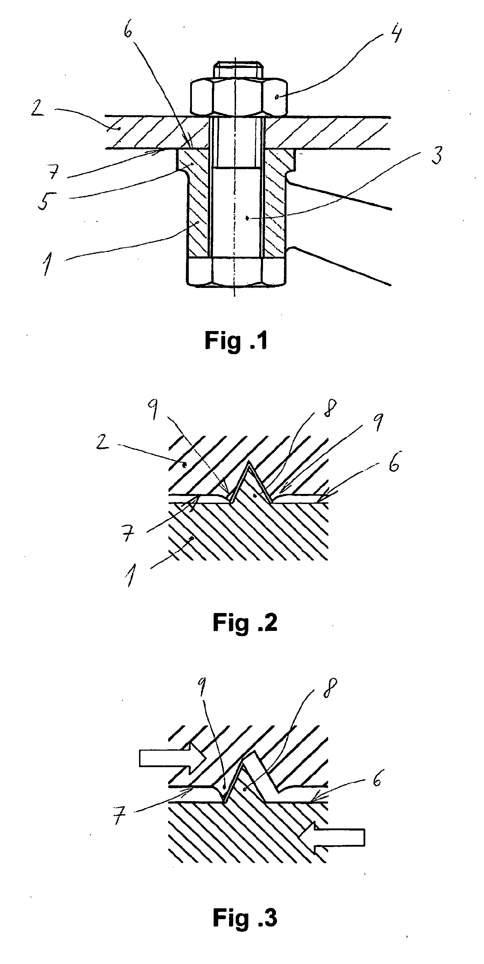

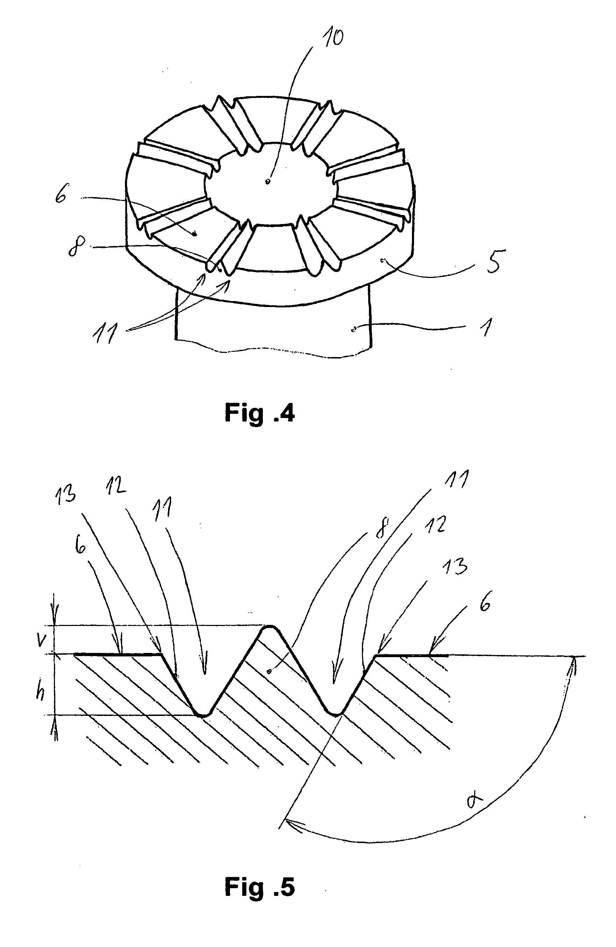

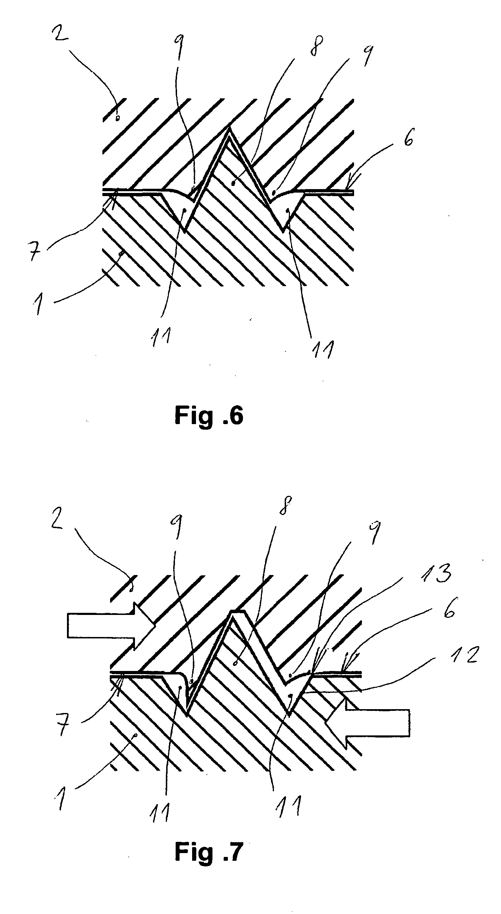

In der Fig. 1 ist der Schnitt der erfindungsgemäßen Schraubverbindung dargestellt. In der Fig. 2 und 3 ist im Detail der Bereich des Sicherungsvorsprungs der Verbindung gemäß dem Stand der Technik, in der Fig. 2 nach dem Anziehen der Schraube und in der Fig. 3 nach Belastung der Verbindung mit den zur Achse der Schraube radialen Kräften dargestellt. In der Fig. **4** ist die Axonometrieansicht der erfindungsgemäßen Kontaktfläche des ersten Bauteils dargestellt. In der Fig. 5 ist der Schnitt der erfindungsgemäßen Kontaktfläche des ersten Bauteils im Bereich des Sicherungsvorsprungs dargestellt. Die Fig. 6 und 7 stellen den Schnitt der Verbindung im Bereich des Vorsprungs dar, in der Fig. 6 nach dem Anziehen der Schraube und in der Fig. 7 nach der Belastung der Verbindung mit den zur Schraubachse radialen Kräften.

### Ausführungsbeispiel der Erfindung

In der Fig. 1 ist im Schnitt eine Schraubverbindung dargestellt, welche eine Röhre **1** mit einem Rahmen **2** verbindet. Eine Schraube **3** geht durch die Röhre **1** und die Öffnung im Rahmen **2** durch und wird mit der Mutter **4** gesichert. Die Röhre **1** mündet am Ende in den Flansch **5,** dessen Stirnseite die Auflagefläche **6** der Röhre **1** am Rahmen **2** bildet. Der Auflagefläche **6** entspricht die Kontaktfläche **7** des Rahmens **2,** die glatt, ohne Vorsprünge oder Aussparungen ist.

In der Fig. 2 und 3 ist ein Schnitt des Auflagebereiches beider Bauteile mit Formausführung gemäß dem bekannten Stand der Technik dargestellt. In der Fig. 2 ist der Stand nach dem Anziehen der Mutter **4** mit dem vorgegebenen Anzugsmoment angezeigt. Die Kontaktfläche **6** weist den Vorsprung **8** auf, der in die Kontaktfläche **7** des Rahmens **2** eingedrückt wird. Dabei wird von der Kontaktfläche **7** nach außen das Material verdrängt, das an beiden Seiten des Vorsprungs **8** Ausquetschungen **9** bildet. Diese Ausquetschungen **9** hindern das Aufsetzen der Kontaktfläche **7** auf die Kontaktfläche **6,** der gegenseitige Kontakt wird nur an der Berührungsstelle der Ausquetschungen **9** mit der Kontaktfläche **6** gebildet. In der Fig. 3 ist der Stand nach der Belastung der Verbindung mit der grenzüberschreitenden, zur Schraubachse **3** radialen Kraft. Die Röhre **1** macht eine relative Schubbewegung gegenüber dem Rahmen **2,** der Vorsprung **8** vergrößert die Höhlung, die er an der Auflagefläche **7** ausgebildet hat und das verdrängte Material vergrößert die Ausquetschung **9.** Diese größer werdende Ausquetschung **9** drückt die beiden Kontaktflächen voneinander und der Vorsprung **8** läuft in die ausgebildete Höhlung ein. Nach der Entlastung wird die Ausquetschung **9** durch die Einwirkung der Vorspannungskraft der Schraube wieder im gewissen Maße zusammengedrückt, der Vorsprung **8** kann sich jedoch in der Höhlung mit Spielraum bewegen und deshalb wird die Beständigkeit der Verbindung gegenüber den Querkräften verringert.

In der Fig. 4 ist die Kontaktfläche **6** mit der Anpassung gemäß einer der möglichen Ausführungen der Erfindung dargestellt. Die Kontaktfläche **6** weist eine Menge von Vorsprüngen **8** auf, die an ihr gleichmäßig verteilt sind und sich radial von der Öffnung **10** für die Schraube **3** zu ihrem Rand erstrecken. Die Kontaktfläche **6** ist somit in entsprechende Anzahl von Segmenten unterteilt, welche die Form von Ringsektoren haben. Die Vorsprünge **8** ragen axial über die Auflagefläche **6** um die Höhe **v** aus und haben einen Dreieckprofil mit Gipfelwinkel nahe 60°. Durch die Vergrößerung des Gipfelwinkels des Vorsprungs **8** wird seine Fertigung erleichtert und seine Beständigkeit gegen Deformationen erhöht, was das Anwenden der Erfindung auch für Materialien mit geringerer Festigkeit ermöglichen wird.

Die Gipfel der Vorsprünge sind wegen der Fertigungstechnologie leicht abgerundet. Die Vorsprünge **8** sind an beiden Seiten mit Aussparungen **11** umgeben, die sie von der Segmenten der Kontaktfläche **6** trennen. Die Aussparungen haben ebenfalls einen Dreieckprofil, sie knüpfen direkt an die Seiten des Vorsprungs **8** an und greifen in einer Tiefe **h** unter der Kontaktfläche **6** ein. Die Tiefe **h** entspricht etwa der Höhe v des Vorsprungs **8.** Die Füße der Vorsprünge **8** sind gleichzeitig die Gipfel der Aussparungen **11** und sind aus technologischen Gründen abgerundet. Die Wände **12** der Aussparungen **11,** die dem. Vorsprung **8** abgewandt sind, schließen mit der Kontaktfläche den Winkel α ein, der an **120°** herankommt. Die Übergänge **13** zwischen der Wand **12** der Aussparung **11** und der Kontaktfläche **6** sind nicht abgerundet und weisen eine scharfe Kante bzw. technologisch erreichbare kleinste Abkantung oder Abrundung auf.

Die Fig. 6 stellt den Bereich des Vorsprungs **8** nach dem Anziehen der Schraubverbindung dar. Der Vorsprung **8** ist in der Kontaktfläche **7** eingedrückt, wobei an seinen Seiten aus der Kontaktfläche **7** die Ausquetschungen **9** verdrängt wurden. Die Aussparungen **11** sind ausreichend dimensioniert, sodass die Ausquetschungen **9** die Kontaktfläche **6** nicht berühren, die komplett auf die Kontaktfläche **7** aufsetzt. Im Betrieb kann also nicht mehr ein Vorspannungskraftverlust der Verbindung infolge der weiteren Annäherung der Kontaktflächen **6** und **7** auftreten.

In der Fig. 7 ist der Stand nach der Belastung durch die zur Schraubachse radialen grenzwertüberschreitenden Kräfte dargestellt. Eine relative Schubbewegung zwischen den beiden zu verbindenden Bauteilen tritt auf, jedoch bei deutlich höherer Querbelastung, als bei der Ausführung gemäß dem Stand der Technik. Die Kontaktflächen **6** und **7** sind weiterhin im Kontakt, sodass eine Reibkraft zwischen ihnen stets erhalten wird. An der einen Seite des Vorsprungs **8** vergrößert sich die Ausquetschung **9,** die weiter in die Aussparung **11** verdrängt wird. Durch ihre Vergrößerung vergrößert sich die Kontaktfläche mit dem Vorsprung **8,** wodurch der spezifische Druck verringert und der Widerstand gegen die Schubbewegung erhöht wird. Der Vorsprung **8** fährt aus der ausgebildeten Höhlung nicht aus, macht sie nur breiter. Nach gewisser relativer Schubbewegung gelangt die Ausquetschung **9,** die an der anderen Seite des Vorsprung **8** ist, in Kontakt mit der scharfen Kante des Überganges **13** zwischen der Aussparung **11** und der Kontaktfläche **6.** Dank der scharfen Kante und dem steilen Winkel α zwischen der Wand **12** und der Kontaktfläche **6** läuft die Ausquetschung **9** nicht auf die Kontaktfläche **6** auf und dadurch werden beide Kontaktflächen nicht voneinander getrennt, sondern die Ausquetschung **9** klemmt hier ein und durch den Profil verhindert ebenfalls die relative Schubbewegung beider Bauteile. Die Kontaktflächen **6** und **7** sind also stets im Kontakt, bei geeignet gewählten Abmessungen der Aussparungen **11** werden sie nicht voneinander getrennt sowie der Grenzwert der radialen Kraft zur Schraubachse **3** nicht überschritten wird.

### Industrielle Nutzbarkeit

Die erfindungsgemäße Schraub- oder Nietverbindung kann für alle Verbindungen genutzt werden, bei denen die Verbindung gegen die Einwirkung der radialen Schubkräfte gegenüber der Achse des Verbindungselementes zu sichern ist. Insbesondere kann sie für die Verbindungen der Haupttragstruktur des Fahrzeuges mit den Hilfsrahmen oder Federlagerungen genutzt werden.

## Patentansprüche

1. Schraub- oder Nietverbindung, die wenigstens zwei Bauteile (1, 2) verbindet, die mit Kontaktflächen (6, 7) aufeinander aufsetzen, welche eine Öffnung (10) für ein Verbindungselement (3) umschließen, wobei die Kontaktfläche (6) des ersten Bauteils (1) mindestens einen Vorsprung (8) aufweist, **dadurch gekennzeichnet, dass** der Vorsprung (8) wenigstens am Teil seiner Länge von beiden Seiten unmittelbar mit Aussparungen (11) umgeben ist, die ihm von der Kontaktfläche (6) trennen.

2. Schraub- oder Nietverbindung nach dem Anspruch 1, **dadurch gekennzeichnet, dass** die Vorsprünge (8) die Form von linearen Wülsten aufweisen, die sich radial von der Öffnung (10) für das Verbindungselement (3) erstrecken.

3. Schraub- oder Nietverbindung nach dem Anspruch 1, **dadurch gekennzeichnet, dass** der Vorsprung (8) die Form einer ringartigen Wulst aufweist, der konzentrisch mit der Öffnung (10) für das Verbindungselement (3) ist.

4. Schraub- oder Nietverbindung nach einem der vorherigen Ansprüche, **dadurch gekennzeichnet, dass** der Übergang (13) der Aussparung (11) in die Kontaktfläche (6) eine scharfe Kante aufweist.

5. Schraub- oder Nietverbindung nach einem der vorherigen Ansprüche, **dadurch gekennzeichnet, dass** der Vorsprung (8) im Wesentlichen einen Dreieckprofil hat.

6. Schraub- oder Nietverbindung nach einem der vorherigen Ansprüche, **dadurch gekennzeichnet, dass** die Wand (12) der Aussparung (11), die dem Vorsprung (8) abgewandt ist, mit der Kontaktfläche (6) den Winkel (α) kleiner als 130° einschließt.

7. Schraub- oder Nietverbindung nach einem der vorherigen Ansprüche, **dadurch gekennzeichnet, dass** die Höhe (v) des Vorsprungs (8) über der Kontaktfläche (6) im Grunde identisch mit der Tiefe (h) der Aussparung (11) ist.

## Claims

1. Screw connection or rivet connection which connects at least two components (1, 2) which are positioned one upon the other by way of contact surfaces (6, 7) which surround an opening (10) for a connecting element (3), wherein the contact surface (6) of the first component (1) has at least one protrusion (8), **characterized in that** the protrusion (8), at least over part of its length, is enclosed directly, from both sides, by cutouts (11), which separate the protrusion from the contact surface (6).

2. Screw connection or rivet connection according to Claim 1, **characterized in that** the protrusions (8) are in the form of linear beads which extend radially from the opening (10) for the connecting element (3).

3. Screw connection or rivet connection according to Claim 1, **characterized in that** the protrusion (8) is in the form of an annular bead which is concentric with the opening (10) for the connecting element (3).

4. Screw connection or rivet connection according to one of the preceding claims, **characterized in that** the transition (13) of the cutout (11) into the contact surface (6) has a sharp edge.

5. Screw connection or rivet connection according to one of the preceding claims, **characterized in that** the protrusion (8) has essentially a triangular profile.

6. Screw connection or rivet connection according to one of the preceding claims, **characterized in that** the wall (12) of the cutout (11), said wall being directed away from the protrusion (8), encloses the angle (α) of less than 130° with the contact surface (6).

7. Screw connection or rivet connection according to one of the preceding claims, **characterized in that** the height (v) of the protrusion (8) above the contact surface (6) is basically identical to the depth (h) of the cutout (11).

## Revendications

1. Assemblage par vis ou rivet, lequel assemble au moins deux composants (1, 2) qui reposent l'un sur l'autre avec des surfaces de contact (6, 7), lesquelles entourent une ouverture (10) pour un élément de liaison (3), la surface de contact (6) du premier composant (1) présentant au moins une partie en saillie (8), **caractérisé en ce que** la partie en saillie (8) est entourée au moins sur une partie de sa longueur directement des deux côtés par des évidements (11) qui la séparent de la surface de contact (6).

2. Assemblage par vis ou rivet selon la revendication 1, **caractérisé en ce que** les parties en saillie (8) présentent la forme de bourrelets linéaires qui s'étendent dans le sens radial depuis l'ouverture (10) pour l'élément de liaison (3).

3. Assemblage par vis ou rivet selon la revendication 1, **caractérisé en ce que** la partie en saillie (8) présente la forme d'un bourrelet de type annulaire qui est concentrique avec l'ouverture (10) pour l'élément de liaison (3).

4. Assemblage par vis ou rivet selon l'une des revendications précédentes, **caractérisé en ce que** la transition (13) de l'évidement (11) dans la surface de contact (6) présente un bord acéré.

5. Assemblage par vis ou rivet selon l'une des revendications précédentes, **caractérisé en ce que** la partie en saillie (8) possède pour l'essentiel la forme d'un profilé triangulaire.

6. Assemblage par vis ou rivet selon l'une des revendications précédentes, **caractérisé en ce que** la paroi (12) de l'évidement (11), laquelle se trouve à l'opposé de la partie en saillie (8), forme avec la surface de contact (6) un angle (α) inférieur à 130°.

7. Assemblage par vis ou rivet selon l'une des revendications précédentes, **caractérisé en ce que** la hauteur (v) de la partie en saillie (8) au-dessus de la surface de contact (6) est fondamentalement identique à la profondeur (h) de l'évidement (11).
